# EUROPÄISCHE PATENTANMELDUNG

(11) **EP 4 583 374 A1**
(43) Veröffentlichungstag der Anmeldung: **09.07.2025**
(21) Anmeldenummer: 24150416.6
(22) Anmeldetag: 04.01.2024
(51) Int. Cl.: H02K 5/10, H02K 5/22, H02K 11/21

(54) **THERMISCHE ENTKOPPELUNG VON GEBER UND AKTIVTEIL AN MOTOREN MIT OPTISCHEN GEBERN**

(71) Anmelder: Siemens Aktiengesellschaft, 80333 München (DE)
(72) Erfinder: Angler, Daniel, 97633 Saal an der Saale (DE); Handwerker, Michael, 97653 Bischofsheim (DE); Mai, Mathias, 97653 Bischofsheim (DE); Serna-Calvo, Eva Teresa, 91080 Spardorf (DE)
(74) Vertreter: Siemens Patent Attorneys

(57) **Zusammenfassung**

Die Erfindung betrifft eine dynamoelektrische Maschine (1) mit einer Welle (5), die mit einem Rotor (9) drehfest verbunden ist, wobei die Welle (5) an einem Ende (NDE) einen Geber (13) aufweist und an dem anderen Ende (DE) eine Arbeitsmaschine mechanisch koppelbar ist, wobei der Rotor (9) mit einem ein Wicklungssystem (7) aufweisenden Stator (8) über einen Luftspalt (12) elektromagnetisch wechselwirkt, um damit eine Rotation der Welle (5) zu bewirken, wobei der Geber (13) in einem Gebergehäuse (14) angeordnet ist, das von einer axial unmittelbar anschließenden Maschinenkomponente der dynamoelektrischen Maschine (1) mittels einer Formdichtung (16) thermisch entkoppelt ist.

## Beschreibung

Die Erfindung betrifft eine dynamoelektrische Maschine mit Geber, deren Gebergehäuse oder Geberdeckel von der dynamoelektrischen Maschine thermisch entkoppelt ist.

An permanenterregten dynamoelektrischen Maschinen, wie z.B. Servomotoren, sind auf deren Nichtantriebsseite (NDE) Platinen eines Gebers mit deren Sensoriken und Elektroniken vorgesehen, die nur bis zu vorgegebenen, bauteilbestimmten Grenztemperaturen betrieben werden dürfen.

Andernfalls werden die Komponenten der Geber irreparabel beschädigt oder gar zerstört, was den Betrieb der dynamoelektrischen Maschine und dadurch betroffene Arbeitsprozesse maßgeblich einschränken würde.

Durch die Erwärmung im Wicklungssystem der dynamoelektrischen Maschine, den Verlusten im Geber, sowie durch die in den Bausteinen der Geberplatinen erzeugten Verluste werden in Summe die Grenztemperaturen der Geberplatinen erreicht. Beim Erreichen dieser Grenztemperaturen liegen die Wicklungstemperaturen bei einer Vielzahl von dynamoelektrischen Maschinen noch unter den für das Isoliersystem des Wicklungssystems zulässigen Temperaturen.

Die Ausnutzung dieser dynamoelektrischen Maschine wird somit durch das Erreichen des Temperaturlimits der Platinenkomponenten begrenzt und nicht durch die zulässige thermische Ausnutzung des Isoliersystems des Wicklungssystems. Dies führt damit u.a. zu einem höheren Einsatz von Aktivmaterial in der dynamoelektrischen Maschine, um die erzeugte Temperatur im Geber zu reduzieren.

Außerdem müssen dynamoelektrische Maschine, wie Servomotoren je nach Anforderung z.B. die Schutzarten IP64, IP65 oder IP67 einhalten.

Somit gilt dies auch für die Dichtstellen zwischen einem Lagerschild zu einer Isolierscheibe als auch von der Isolierscheibe zu einem Gebergehäuse oder Geberdeckel.

Daher ist es erforderlich, die dynamoelektrische Maschine und/oder gewisse Komponenten der dynamoelektrischen Maschine zum Geber thermisch zu entkoppeln. Dies geschieht mittels Isolierscheiben, die an vorgesehenen Positionen eines Gehäuses der dynamoelektrischen Maschine oder an Lagerschilde geklebt und/oder geschraubt werden.

Damit wird versucht den Wärmestrom u.a. von dem Wicklungssystem der dynamoelektrischen Maschine über das Gehäuse und Lagerschild zu den Geberkomponenten zu unterbinden. Um zusätzlich auch die erforderliche Schutzart einzuhalten, werden an den Schnittstellen von Gehäuse oder Lagerschild zur Isolierscheibe und von der Isolierscheibe zum Geber O-Ringe vorgesehen. Für die Dichtsitze dieser O-Ringe sind hohe Anforderungen an die bearbeiteten Oberflächen der beteiligten Dichtungspartner, wie Gehäuse oder Lagerschilde und Isolierscheibe zu stellen.

An der Isolierscheibe kann es aufgrund der hohen radialen Belastungen durch die verpressten O-Ringe und der lokal dünnen Wandstärken der Isolierscheibe sporadisch zu Brüchen kommen, was wiederum zum Verlust der Schutzart der dynamoelektrischen Maschine führt. Diese vergleichsweise hohe radiale Verpressung ist jedoch für die Einhaltung der Schutzart erforderlich.

Ebenso müssen dynamoelektrische Maschinen, wie z.B. Servomotoren vorgegebene EMV-Anforderungen erfüllen.

Ausgehend davon liegt der Erfindung die Aufgabe zugrunde eine dynamoelektrische Maschine zu schaffen, die u.a. die oben genannten Nachteile vermeidet und auch mit einem angebauten Geber eine vergleichsweise hohe Ausnutzung ihrer Aktivteile gestattet. Des Weiteren soll die vergleichsweise hohe Belastung der Isolierscheibe vermieden werden.

Die Lösung der gestellten Aufgabe wird erfindungsgemäß durch die Merkmale des unabhängigen Anspruchs gelöst.

Vorteilhafte Ausgestaltungen der Erfindung sind Gegenstand der abhängigen Ansprüche.

Erfindungsgemäß wird nunmehr eine dynamoelektrische Maschine mit einer Welle, die mit einem Rotor drehfest verbunden ist, wobei die Welle an einem Ende (NDE) einen Geber aufweist und an dem anderen Ende (DE) eine Arbeitsmaschine mechanisch koppelbar ist, und wobei der Rotor mit einem ein Wicklungssystem aufweisenden Stator über einen Luftspalt elektromagnetisch wechselwirkt, um damit eine Rotation der Welle zu bewirken,
wobei der Geber in einem Gebergehäuse angeordnet ist, das von einer axial unmittelbar anschließenden Maschinenkomponente der dynamoelektrischen Maschine mittels einer Formdichtung zumindest thermisch entkoppelt.

Unter Geber werden dabei alle Arten von Gebern verstanden, insbesondere optische Geber oder Resolver.

Unter dem Gebergehäuse wird allgemein eine Abdeckung des den Geber aufnehmenden Raumes - den Geberraum - verstanden, also ein NDE-Abschlusselement. Dies können Deckel als auch ein Gehäuse sein, das zumindest einen axial erstreckenden Bund aufweist.

Des Weiteren entfaltet diese Formdichtung in diesem Bereich eine Dichtwirkung, um die jeweils vorgegebenen Schutzklassen einzuhalten. Außerdem wird eine elektromagnetische Abschirmung unterstützt, damit vorgegebene EMV-Forderungen der dynamoelektrischen Maschine eingehalten werden.

Als Formdichtung im Sinne der Erfindung wird dabei insbesondere eine statische lösbare Berührungsdichtung verstanden, die durch äußere, in diesem Fall axiale Kräfte eine Dichtpressung schafft.

Die Formdichtung weist ein vergleichsweise hohes Rückstellverhalten unter Druck und Temperatur auf, um dauerhaft die Schutzartanforderungen zu gewährleisten. Dabei ist vorteilhafterweise ein Dauereinsatztemperatur von ca. 120-125°C vorzusehen. Um die Dichtheit der Formdichtung im eingebauten Zustand zu gewährleisten, ist eine ausreichende Herstellgenauigkeit wünschenswert. Des Weiteren weist die Formdichtung eine Beständigkeit gegen Industrieatmosphären auf, wie sie z.B. beim Einsatz in Werkzeugmaschinen und Robotern auftreten. Vorteilhafterweise weist die Formdichtung Silikonfreiheit auf, da damit die potentielle Gefahr von Ausdampfungen im Motorbetrieb vermieden werden, die die Geberfunktion beeinträchtigen könnten.

Diese Formdichtung kann zum Beispiel aus FKM (Fluorkautschuk), EPDM (Ethylen-Propylen-Dien-Kautschuk) oder NBR (Nitril-Butadien-Kautschuk) sein.

Als Geber werden dabei Sensoren zur Erfassung oder Winkeländerungen verstanden, die Winkelveränderung und Drehrichtung erfassen können und mit einer dementsprechenden Elektronik zur Auswertung ausgestattet sind. Diese Geber können dabei eigengelagert oder ohne eigene Lagerung mit der Welle gekoppelt sein.

Der Gebergehäuse bzw. der Geberdeckel weist am radial äußeren Umfang eine einen nahezu vollständig umlaufenden Bund auf, der sich axial Richtung dynamoelektrische Maschine erstreckt.

Die radial und axial innerhalb dieses Bundes am Geberdeckel liegende Formdichtung ist idealerweise so ausgelegt, dass ein Wasserstrahl nicht direkt auf die Dichtflächen trifft, sondern zunächst mindestens eine Umlenkung überwinden muss.

Die für die EMV-Anforderungen erforderliche sichere Kontaktierung zwischen dem Gebergehäuse bzw. Geberdeckel und einer Maschinenkomponenten, wie z.B. dem Gehäuse der dynamoelektrischen Maschine oder einem Lagerschild, wird idealerweise über die am radial äußeren Rand des Gebergehäuses bzw. Geberdeckels im Bereich des Bundes vorhandene Dome gewährleistet. Dadurch wird außerdem über eine vorgegebene Anzahl von Befestigungsschrauben das Gebergehäuse bzw. der Geberdeckel an der Maschinenkomponente, wie z.B. einem Lagerschild lösbar fixiert.

Die erfindungsgemäße Formdichtung wird dabei im Kraftnebenschluss eingesetzt, sodass die Belastung im Betrieb durch Druck und Temperatur weitgehend verhindert wird. Des Weiteren verhindert der Kraftnebenschluss eine Biegebeanspruchung auf die verbundenen Teile (Maschinenkomponente und Gebergehäuse), wodurch ein definiertes Anziehen der Schrauben gewährleistet ist.

Dadurch wird das Gebergehäuse bzw. der Geberdeckel beim Anschrauben nicht verbogen und die innen liegende Formdichtung wird am Umfang definiert und gleichmäßig zwischen Maschinenkomponente und Gebergehäuse bzw. Geberdeckel gepresst, um somit u.a. die Anforderungen an die Schutzart und die EMV-Anordnungen zu erfüllen.

Am äußeren Umfang, also zwischen den umfänglich verteilten Anschraubstellen, den Domen, ist der äußere Bund von Gebergehäuse bzw. Geberdeckel bzgl. der Maschinenkomponente axial zurückgesetzt, um einen definierten Spalt zwischen der Maschinenkomponente, z.B. einem Lagerschild und dem Gebergehäuse zu schaffen. Dadurch wird ein Wärmeübergang von der Maschinenkomponente zum Gebergehäuse zusätzlich deutlich reduziert.

Die erfindungsgemäße Ausführung weist folgende Vorteile auf:
Der Geberdeckel bzw. das Gebergehäuse weist eine vergleichsweise größere Außenfläche auf und bildet somit größere Oberfläche zur Wärmeabgabe des Gebers, bzw. des Geberraumes an die Umgebung.

Der bisher umständliche Aufbau und die Fehleranfälligkeit, z.B. sporadische Brüche der Isolierscheibe zwischen der Maschinenkomponente und dem Geberdeckel bzw. dem Gebergehäuse aufgrund der hohen Festigkeitsbelastung der Isolierscheibe, werden vermieden.

Die erfindungsgemäße Formdichtung und deren Positionierung führt zu einer Funktionsintegration, so dass aus weniger Komponenten mehr Funktionalität gewonnen wird, indem z.B. 2 O-Ringe entfallen. Des Weiteren wird dadurch die Anzahl der abzudichtenden Schnittstellen gegenüber bisherigen Ausführungen reduziert.

Auf eine spanende Bearbeitung des Geberdeckels kann aufgrund der insbesondere flächigen Formdichtung verzichtet werden.

Zusätzlich wird der Geber, insbesondere die Geberplatine optional mittels einer wärmeleitfähigen Paste mit der Innenseite des Geberdeckels z.B. aus Alu-Druckguss verbunden, um die auf den Platinen und in optionalen Eigenlagerung des Gebers erzeugte Verlustwärme von der Platine zum Geberdeckel zu transportieren und anschließend über die Außenfläche des Geberdeckels und/oder optionalen Kühlrippen an die Umgebung abzugeben. Hierzu muss der Geberdeckel entsprechend kühler als die Platine sein, bzw. thermisch von dem Gehäuse der Maschine entkoppelt sein, um ein ausreichendes Temperaturgefälle für den erforderlichen Wärmeübergang im Bereich des Gebers zu erreichen.

Die über die Dome, also die vorgegebenen gebildeten Kontaktflächen zwischen der Maschinenkomponente und dem Geberdeckel bzw. dem Gebergehäuse, sind vorzugsweise möglichst gering zu halten, da sich sonst ein zu verhindernder Wärmestrom von der Maschinenkomponente, z.B. das Lagerschild zum Geberdeckel einstellt.

Für eine notwendige Fixierung des Gebergehäuses bzw. Geberdeckels an der Maschinenkomponente sind mindestens zwei Befestigungspunkte notwendig. Vier Befestigungspunkten bilden eine bevorzugte, da diesbezüglich ausreichende Ausführungsform. Jedoch sollte die Anzahl der Dome, die ja auch Wärmebrücken zwischen Maschinenkomponente und Gebergehäuses bzw. Geberdeckel darstellen, hinsichtlich EMV-Anforderungen, Wärmeübergang, Dichtigkeit optimiert werden.

Die Erfindung sowie weitere vorteilhafte Ausgestaltungen der Erfindung werden anhand prinzipiell dargestellter Ausführungsbeispiele näher erläutert, darin zeigen:
- FIG 1: einen Längsschnitt einer prinzipiell dargestellten dynamoelektrischen Maschine,
- FIG 2: eine Detailansicht im Bereich der Formdichtung,
- FIG 3: eine bespielhafte Befestigung von Gebergehäuse und Maschinenkomponente,
- FIG 4: eine Detailansicht des Spaltes
- FIG 5: eine perspektive Detailansicht von Gebergehäuse und Lagerschild.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 des Rotors 9 und damit auf die entsprechende Symmetrieachse des Stators 8. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

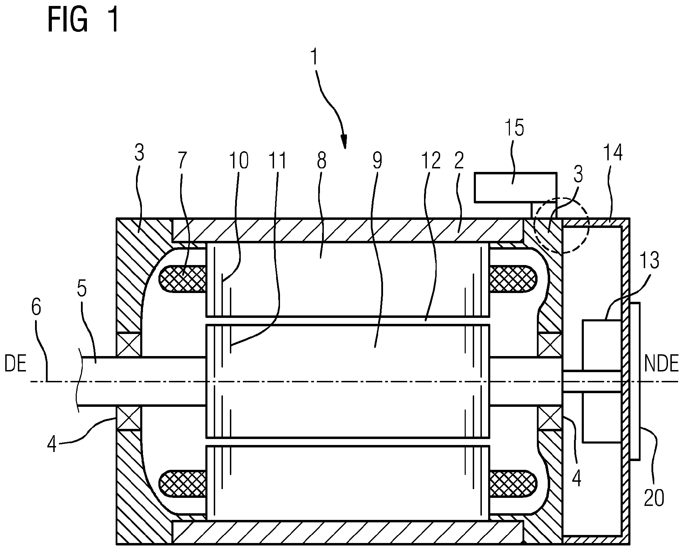

FIG 1 zeigt einen prinzipiellen Längsschnitt einer dynamoelektrischen Maschine 1. Ein Stator 8, mit einem, in im Wesentlichen axial verlaufenden Nuten angeordneten Wicklungssystem 7, ist in diesem Beispiel in einem Gehäuse 2 angeordnet. Über Lagerschilde 3 stützt sich das Gehäuse 2 mittels Lager 4 auf einer Welle 5 ab.

Alternativ ist auch ein sogenanntes Topfgehäuse denkbar, wobei Gehäuse 2 und Lagerschild 3 der DE-Seite ein einstückiges Teil bilden, das einen Wellendurchtritt aufweist.

Durch einen Luftspalt 12 vom Stator 8 beabstandet, ist ein Rotor 9 vorgesehen, der beispielsweise nicht näher dargestellte Permanentmagnete aufweist. Sowohl die Blechpakete 10, 11 von Stator 8 und Rotor 9 können optional axial verlaufende Kühlkanäle aufweisen, um auf diese Weise einen geschlossenen Innenkühlkreislauf innerhalb des Gehäuses 2 zu ermöglichen. Bei Bestromung des Wicklungssystems 7 des Stators 8 wird durch elektromagnetische Wechselwirkung mit dem Rotor 9 die Welle 5 um eine Achse 6 in Drehung versetzt. Diese Drehung bewirkt einen Antrieb (Drehmoment) einer nicht näher dargestellten Arbeitsmaschine auf der DE-Seite der dynamoelektrischen Maschine 1.

Auf der NDE-Seite ist ein Geber 13 in axialer Verlängerung der Welle 5 angebracht.

Als Geber 13 im Sinne der Erfindung werden dabei u.a. Sensoren zur Erfassung der Position und/oder Winkeländerungen verstanden, die Winkelveränderung und Drehrichtung der Welle 5 erfassen können und mit einer dementsprechenden Auswerteelektronik ausgestattet sind, die auf dementsprechend angeordneten Platinen des Gebers 13 positioniert sind.

Diese Geber 13 können dabei eigengelagert oder fliegend gelagert mit der Welle 5 oder direkt mit der Welle gekoppelt sein. Es ist ebenso eine mechanische Kopplung des Gebers 13 über eine nicht näher dargestellte Kupplung vorstellbar.

Diese Geber 13 sind insbesondere als optische Geber 13 mit einer Codescheibe oder als Resolver ausgeführt.

Über einen oder mehrere Stecker 15, die vorzugsweise am Lagerschild 3 angebracht sind, wird die dynamoelektrische Maschine 1, insbesondere das Wicklungssystem 7 des Stators 8 elektrisch versorgt, als auch die Signale des Gebers 13 an einem nicht näher dargestellten Umrichter übermittelt.

Das Gehäuse 2 der Maschine und/oder ein Gebergehäuse 14 bzw. ein Geberdeckel ist vorzugsweise durch Gießverfahren gefertigt. Dabei sind Alu-(Druck-)Guss, Grau-Guss, Kunststoffe, Hybridmaterialien die bevorzugten Werkstoffe. Die Maschinenkomponenten, als auch Gebergehäuse 14 bzw. Geberdeckel können durch Additive Manufactoring (AM) hergestellt werden.

Das Gebergehäuse 14 bzw. der Geberdeckel ist mit einer Maschinenkomponente der dynamoelektrischen Maschine 1, wie Gehäuse 2 oder Lagerschild 3 mechanisch verbunden. Derartige Maschinenkomponenten sind aus Metall, insbesondere durch Druckgießen gefertigt. Die Maschinenkomponente und/oder Gebergehäuse 14 sind beispielsweise aus Aluminium oder einer Aluminiumlegierung gefertigt.

Eine Ausgestaltung der Erfindung sieht vor, dass die Formdichtung 16 im Wesentlichen scheibenförmig bzw. ringförmig ausgebildet ist. Die Formdichtung 16 kann dabei in radialer und/oder axialer Ausdehnung ungleichförmig ausgestaltet sein, um sich an die Kontur der benachbarten Geber- und/oder Maschinenkomponenten anpassen zu können.

Die Formdichtung 16 ist aus einem Dichtungsmaterial gefertigt, beispielsweise aus Silikon, FKM (Fluorkautschuk), EPDM (Ethylen-Propylen-Dien-Kautschuk), NBR (Nitril-Butadien-Kautschuk, TPE (Thermoplastisches Polyurethan), TPU oder einer 2K Spritzdichtung etc.

Die Formdichtung 16, vor allem mit den beschriebenen Ausgestaltungen der Erfindung ermöglicht vorteilhaft eine großflächige thermische Entkopplung der Maschinenkomponente und des daran anliegenden Gebergehäuses 14, sodass zwischen Maschinenkomponente und Gebergehäuse 14 ein vergleichsweise großer Temperaturgradient existiert.

Ein Überhitzen des Gebers 13 bzw. seiner Sensoriken und Elektroniken wird dadurch vermieden. Dies ist insbesondere vorteilhaft, wenn die dynamoelektrische Maschine 1 als ein Servomotor ausgebildet ist, da Aktivteile von Servomotoren im Betrieb oft sehr heiß werden.

Eine Ausgestaltung der Erfindung sieht vor, dass die Formdichtung 16 selbst und/oder anliegende Dichtungsflächen von Maschinenkomponente und/oder Geberdeckel mit jeweils wenigstens einer labyrinthartig umfänglich verlaufenden Kontur oder Struktur 22 ausgebildet sind, um die erforderlichen Schutzklassen zu erreichen. Dies Kontur kann dabei in einfacher Ausprägung auch nur als Stufe oder Rinne ausgebildet sein.

Die zumindest abschnittsweise vorgesehene Dichtungsflächen an der Maschinenkomponente und/oder dem Gebergehäuse 14 und/oder der Formdichtung 16 mit labyrinthartig umfänglich verlaufenden Strukturen 22 bzw. Vertiefungen verbessern die Dichtwirkung und bilden eine formschlüssige Verbindung zwischen der Maschinenkomponente und dem Gebergehäuse 14.

Gleichzeitig wird durch die Formdichtung 16 ein Eindringen von Flüssigkeiten in die dynamoelektrische Maschine 1 vermieden. Derartige Flüssigkeiten sind beispielsweise Strahlwasser oder Schmiermittel, denen z. B. eine in oder an einer zerspanenden Maschine, wie in einer Fräsmaschine, angeordnete dynamoelektrische Maschine 1 ausgesetzt ist.

Durch die Formdichtung 16 und deren Anordnung zwischen Maschinenkomponente und Gebergehäuse 14 werden nunmehr in einfacher Art und Weise Schutzarten bis zu den so genannten IP-Codes (IP = International Protection) IPX5 (Schutz gegen Strahlwasser) und sogar IPX7 (Schutz gegen die Wirkungen beim zeitweiligen Untertauchen in Wasser), insbesondere bis zu IP68 (völlige Staubdichtheit und Schutz gegen die Wirkungen zeitweiligen Untertauchens in Wasser) eingehalten.

Die Welle 5 weist einen Abschnitt auf, der mit dem Rotor 9 drehfest verbunden ist. An dem der NDE-Seite zugewandten Abschnitt der Welle 5 wird u.a. der Geber 13 positioniert. Die Welle 5 wird dort gelagert. Des Weiteren kann dort zusätzlich der Geber 13 eigengelagert oder fliegend gelagert sein.

Aus dem Maschinengehäuse, also Gehäuse 2 und Gebergehäuse 14 ist auf der DE-Seite die Welle 5 nach außen geführt und kann dort mit Arbeitsmaschinen mechanisch gekoppelt werden.

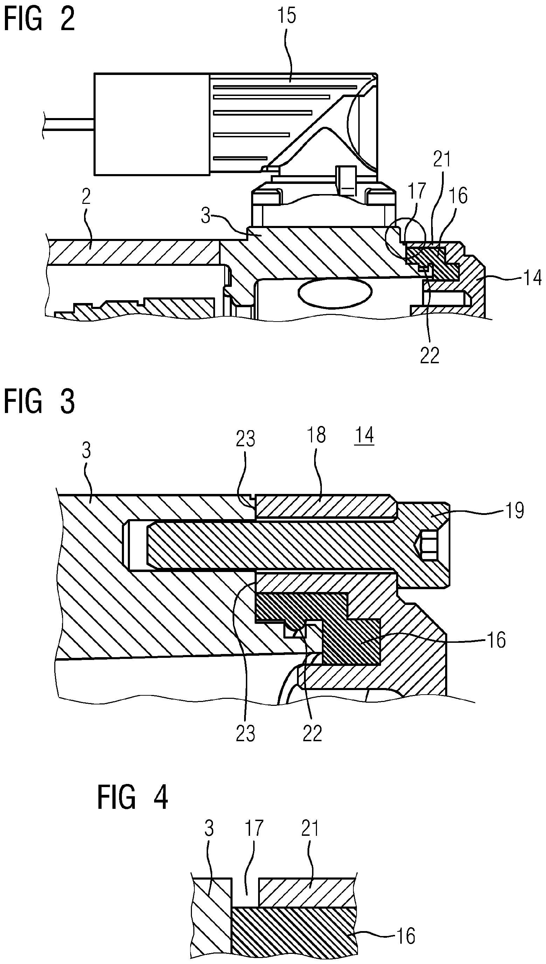

FIG 2 zeigt beispielhaft einen Stecker 15, der auf dem Lagerschild 3 positioniert ist. An das Lagerschild 3 - Richtung NDE-Seite - schließt sich das Gebergehäuse 14 über die Formdichtung 16 an.

Das Gebergehäuse 14 weist aufgrund des Bundes 21 eine vergleichsweise größere Außenfläche auf und bildet somit größere Oberfläche zur Wärmeabgabe des Gebers 13 an die Umgebung.

Der bisher aufwändige und zumindest sporadisch fehleranfällige Aufbau, der zu Brüchen der Isolierscheibe zwischen der Maschinenkomponente und dem Gebergehäuse 14 führen kann, wird somit vermieden.

Die erfindungsgemäße Formdichtung 16 und deren Positionierung an dem Lagerschild 3 und dem Gebergehäuse 14 führt zu einer Funktionsintegration, so dass aus weniger Komponenten mehr Funktionalität gewonnen wird, indem z.B. 2 O-Ringe entfallen. Des Weiteren wird dadurch die Anzahl der abzudichtenden Schnittstellen gegenüber bisherigen Ausführungen reduziert.

Auf eine spanende Bearbeitung des Gebergehäuses 14 kann aufgrund der flächigen Formdichtung 16 verzichtet werden.

Das Lagerschild 3 und/oder die Formdichtung 16 und/oder das Gebergehäuse 14 weisen zumindest eine labyrinthartig oder rinnenförmig umfänglich verlaufende Struktur 22 bzw. Kontur auf.

Dadurch wird ein Eindringen von Gasen und Flüssigkeiten in die dynamoelektrische Maschine 1 an den Aufstellungsorten der Maschine zusätzlich verhindert. Die Formdichtung 16 und deren erfindungsgemäße Anordnung zwischen Lagerschild 3 und Gebergehäuse 14 erfüllt somit die so genannten IP-Codes (IP = International Protection) IPX5 (Schutz gegen Strahlwasser) und sogar IPX7 (Schutz gegen die Wirkungen beim zeitweiligen Untertauchen in Wasser), insbesondere sogar IP68 (völlige Staubdichtheit und Schutz gegen die Wirkungen zeitweiligen Untertauchens in Wasser).

Zusätzlich wird die Geberplatine zumindest abschnittsweise mittels einer wärmeleitfähigen Paste mit der Innenseite des Gebergehäuses 14 aus Alu-Druckguss verbunden, um die auf den Platinen und in optionalen Eigenlagerung des Gebers 13 erzeugte Verlustwärme z. B. von der Platine zum Gebergehäuse 14 zu transportieren. Dort wird die Wärme über innen und/oder außen am Gebergehäuse 14 angeordnete Kühlrippen 20 über die Außenfläche und an die Umgebung abgegeben.

Hierzu muss das Gebergehäuse 14 entsprechend kühler als die Platine sein, bzw. thermisch von dem Gehäuse der dynamoelektrischen Maschine 1 entkoppelt sein, um ein ausreichendes Temperaturgefälle für den erforderlichen Wärmeübergang im Bereich des Gebers 13 zu erreichen.

Das Wärmemanagement des Gebers 13 bzw. Geberraumes sieht dabei vor, dass Wärmeströme aus der Maschine 1 durch die Formdichtung 16 überwiegend vermieden werden und gleichzeitig die im Geber 13 erzeugte Wärme vergleichsweise über die Wärmepaste und/oder Kühlrippen 20 leicht abgegeben wird.

FIG 3 zeigt eine beispielhafte Verbindung des Gebergehäuses 14 mit dem Lagerschild 3 über einen Dom 18. Am Umfang des Gebergehäuses 14 sind mehrere, mindestens zwei Dome 18 angeordnet.

Die über die Dome 18, also die vorgegebenen gebildeten Kontaktflächen 23 zwischen dem Lagerschild 3 und dem Gebergehäuse 14, sind vorzugsweise möglichst gering zu halten, um den Wärmestrom vom Lagerschild 3 zum Gebergehäuse 14 möglichst zu minimieren. Diese Dome 18 sind neben der Fixierung des Gebergehäuses 14 an der Maschinenkomponente, wie dem Lagerschild 3, auch für die Erfüllung der EMV-Anforderungen, z.B. einer Erdungsfunktion erforderlich.

Die Formdichtung 16 wird dabei im Kraftnebenschluss eingesetzt, sodass die Belastung im Betrieb durch Druck und Temperatur weitgehend verhindert wird. Des Weiteren verhindert der Kraftnebenschluss eine Biegebeanspruchung auf Lagerschild 3 und Gebergehäuse 14, wodurch ein definiertes Anziehen der Schrauben 19 gewährleistet ist.

Dadurch wird der Geberdeckel beim Anschrauben nicht verbogen und die innen liegende Formdichtung 16 wird am Umfang definiert und gleichmäßig zwischen Lagerschild 3 und Geberdeckel gepresst, um somit die dauerhaften Anforderungen an die oben erwähnte Schutzart zu gewährleisten.

Am äußeren Umfang des Gebergehäuses 14, also zwischen den umfänglich verteilten Anschraubstellen ist der äußere Bund 21 axial zurückgesetzt, um einen definierten Spalt 17 zwischen dem Lagerschild 3 und dem Gebergehäuse 14 zu schaffen, um somit den Wärmeübergang vom Lagerschild 3 zum Gebergehäuse 14 möglichst stark zu reduzieren.

FIG 4 zeigt in einer Detaildarstellung der FIG 2 den Verlauf des Spaltes 17, der umfänglich betrachtet nur durch die Dome 18 unterbrochen ist.

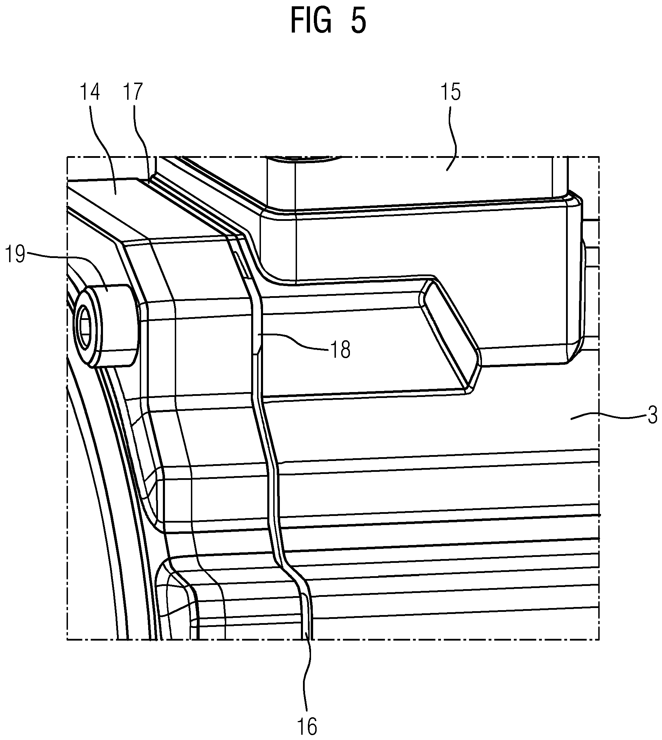

FIG 5 zeigt in einer teilperspektivischen Darstellung das Gebergehäuse 14, das über die Dome 18 direkt mit dem Lagerschild 3, bzw. dessen Kontaktfläche 23 verbunden ist. Umfänglich zwischen den Domen 18 ist die Formdichtung 16 zu sehen. In diesen Bereichen zwischen den Domen ist der Bund 21 des Gebergehäuses 14 axial zurückgesetzt und bildet einen Spalt 17 zum Lagerschild 17. Damit kann dort kein Wärmeeintrag in den Geberraum erfolgen.

### Bezugszeichenliste

- 1: dynamoelektrische Maschine
- 2: Gehäuse
- 3: Lagerschild
- 4: Lager
- 5: Welle
- 6: Achse
- 7: Wicklungssystem
- 8: Stator
- 9: Rotor
- 10: Blechpaket Stator
- 11: Blechpaket Rotor
- 12: Luftspalt
- 13: Geber
- 14: Gebergehäuse
- 15: Stecker
- 16: Formdichtung
- 17: Spalt zwischen Lagerschild und Deckel
- 18: Dom
- 19: Schraubverbindung
- 20: Kühlrippen
- 21: Bund
- 22: labyrinthartige Struktur
- 23: Kontaktfläche

## Patentansprüche

1. Dynamoelektrische Maschine (1) mit einer Welle (5), die mit einem Rotor (9) drehfest verbunden ist, wobei die Welle (5) an einem Ende (NDE) einen Geber (13) aufweist und an dem anderen Ende (DE) eine Arbeitsmaschine mechanisch koppelbar ist,
wobei der Rotor (9) mit einem ein Wicklungssystem (7) aufweisenden Stator (8) über einen Luftspalt (12) elektromagnetisch wechselwirkt, um damit eine Rotation der Welle (5) zu bewirken,
wobei der Geber (13) in einem Gebergehäuse (14) angeordnet ist, das von einer axial unmittelbar anschließenden Maschinenkomponente der dynamoelektrischen Maschine (1) mittels einer Formdichtung (16) thermisch entkoppelt ist.

2. Dynamoelektrische Maschine (1) nach Anspruch 1, **dadurch gekennzeichnet, dass** über zumindest zwei Dome (18), die sich am Außenumfang des Gebergehäuses befinden und vom Gebergehäuse (14) in Richtung Maschinenkomponente achsparallel erstrecken, wobei Gebergehäuse (14) und Maschinenkomponente mittels einer Schraubverbindung (19) verbunden sind.

3. Dynamoelektrische Maschine (1) nach Anspruch 1 oder 2, **dadurch gekennzeichnet, dass** ein direkter Kontakt zwischen Maschinenkomponente und Gebergehäuse (14) nur über Dome (18) erfolgt, wobei sonst ein vorgegebener Spalt (17) zwischen Maschinenkomponente und Gebergehäuse (14) vorgesehen ist.

4. Dynamoelektrische Maschine (1) nach einem der vorhergehenden Ansprüche, **dadurch gekennzeichnet, dass** die Maschinenkomponente als Gehäuse (2) der dynamoelektrischen Maschine (1) oder Lagerschild (3) ausgeführt ist.

5. Dynamoelektrische Maschine (1) nach einem der vorhergehenden Ansprüche, **dadurch gekennzeichnet, dass** zumindest Geberplatinen des Gebers (13) mittels einer wärmeleitenden Paste an das Gebergehäuse (14) thermisch leitend angebunden sind.

6. Dynamoelektrische Maschine (1) nach einem der vorhergehenden Ansprüche, **dadurch gekennzeichnet, dass** das Gebergehäuse zumindest abschnittsweise, insbesondere vertikal verlaufende Kühlrippen (20) aufweist.

7. Dynamoelektrische Maschine (1) nach einem der vorhergehenden Ansprüche, **dadurch gekennzeichnet, dass** die Formdichtung (16) aus Dichtungsmaterial besteht.

8. Dynamoelektrische Maschine (1) nach einem der vorhergehenden Ansprüche, **dadurch gekennzeichnet, dass** wenigstens die Formdichtung (16) zumindest eine umfänglich verlaufende, labyrinthartig oder stufenförmige Kontur aufweist und eine formschlüssige Verbindung mit dem benachbarten Gebergehäuse (14) und/oder einer Maschinenkomponente schafft.

9. Dynamoelektrische Maschine (1) nach einem der vorhergehenden Ansprüche, **dadurch gekennzeichnet, dass** die Maschinenkomponenten und/oder das Gebergehäuse (14), insbesondere aus Aluminium oder einer Aluminiumlegierung gefertigt ist.

10. Dynamoelektrische Maschine (1) nach einem der vorhergehenden Ansprüche, **dadurch gekennzeichnet, dass** die Formdichtung (16) im Wesentlichen umfänglich geschlossen, insbesondere ringförmig ausgebildet ist.
